# EUROPÄISCHE PATENTSCHRIFT

(11) **EP 1 363 031 B1**
(45) Veröffentlichungstag und Bekanntmachung des Hinweises auf die Patenterteilung: **16.11.2005**
(21) Anmeldenummer: 03450089.2
(22) Anmeldetag: 16.04.2003
(51) Int. Cl.: F16B 5/02, F41H 5/013

(54) **Anordnung zur Verbindung von Teilen mit Elementen aus hochhartem Werkstoff**
Assembly for connecting pieces to elements made out of materials of a high degree of hardness
Dispositif de connexion de pièces à des éléments en matériau à dureté élevée

(30) Priorität: 17.05.2002 AT 3142002 U
(43) Veröffentlichungstag der Anmeldung: 19.11.2003
(73) Patentinhaber: Steyr-Daimler-Puch Spezialfahrzeug GmbH, 1110 Wien (AT)
(72) Erfinder: Geringer, Bernhard, 2434 Pischelsdorf (AT); Höfer, Hubert, 2500 Baden (AT)
(74) Vertreter: Rippel, Andreas

(56) Entgegenhaltungen:
- EP-A- 0 213 268
- CH-A- 666 743
- DE-A- 4 119 138
- DE-C- 4 017 167

## Beschreibung

Die Erfindung bezieht sich auf eine Anordnung zur Verbindung von Teilen mit Elementen aus hochhartem Werkstoff, bei welcher Teile über einen Flansch und an diesen angreifenden Schrauben mit dem Element aus hochhartem Werkstoff verbunden sind. Eine solche Anordnung ist aus der CH 666 743 A bekannt.

Hochharte Werkstoffe - insbesondere hochfeste und speziell vergütete legierte Stähle werden zunehmend zum Bau von militärischen (gepanzerten) und zivilen Fahrzeugen und Systemen verwendet. Der große Vorteil der dabei erhöhten ballistischen Schutz-oder Verschleißwirkung bei ähnlichen Materialstärken und damit der wesentlichen Gewichtseinsparung und/oder Standzeit ist hier von besonderem Interesse.

Andererseits sind die Verarbeitungseigenschaften - besonders das Schneiden und Schweissen - nur erschwert und mit verbesserten Randbedingungen möglich. Weiter ist ein deutlicher Funktionsnachteil bei dynamischer bzw. wechselnder Belastung die Sprödigkeit und damit die erhöhte Rißanfälligkeit dieser Materialien: Rißentstehung und -ausbreitung erfordern bei der Konstruktion und der Fertigung besondere Aufmerksamkeit und angepaßte Gestaltungs- und Verfahrensweisen.

Zur Befestigung von Teilen des Fahrzeuges - insbesondere der Laufwerkselemente, wie Stützrollen, Leitrollen und Laufrollen - wird üblicherweise ein Flansch an die tragende Struktur (z.B. Panzerwanne) geschweißt. An der den angeschraubten Teilen abgewandten Seite werden häufig die Gewindebutzen zur fixen Anschraubung der erstgenannten Teile ebenfalls angeschweißt.

Eine solche Gestaltungsweise hat den großen Nachteil, daß aufgrund der Schweißverbindung - im Falle der innenseitigen angeschweißten Butzen sogar der doppelseitigen - sehr leicht Risse im hochdynamischen Betrieb der Fahrzeuge entstehen. Diese führen zur Rißausbreitung über weite Bereiche der Struktur. Im Einzelfall sind Risse beobachtet worden, welche rund um den gesamten Flansch sich ausbreiteten und in der Folge zu einem Totalausfall des Systems führten. Folgeschäden an Mensch und anderem Material sind aufgrund des spezifischen Einsatzes wahrscheinlich. Die Reparatur solcher geschädigten Teile ist schwierig und langwierig.

Die CH 666 743 A zeigt eine Einrichtung zur Befestigung von Schutzelementen auf Panzergrundstrukturen. Bei dieser werden auf eine Panzergrundstruktur Schutzelemente aufgesetzt und mittels Schraubverbindungen darauf befestigt. Die Schraubverbindungen weisen Bolzen auf, welche mit einer Zwischenplatte durch eine Schweißung verbunden sind. Die Zwischenplatte ist rasterförmig mit Löchern versehen, in welchen Schweißnähte bzw. Schweißpunkte zwecks einer auf die ganze Fläche der Zwischenplatte aufgeteilten Verbindung mit der schlecht schweißbaren Panzergrundstruktur angeordnet sind.

Die vielen Schweißnähte bzw. Schweißpunkte liegen zwischen den einzelnen Schraubverbindungen, wodurch auch bei einer solchen Konstruktion sehr leicht Risse im hochdynamischen Betrieb der Fahrzeuge entstehen können.

Die Erfindung hat es sich zum Ziel gesetzt, eine Anordnung der eingangs genannten Art zu schaffen, bei der es nicht zu den obgenannten Rissen u.s.w. führt.

Erreicht wird dies dadurch, daß der Flansch mit einer Platte verschraubt ist, die im Abstand und einßerhalb des von den Schraüben eingenommenen Bereiches mit dem Element aus hochhartem Werkstoff verschweißt ist, wobei die Schrauben an der gegenüberliegenden Seite des Elementes aus hochhartem Werkstoff in formschlüssig gehaltene Gewindebutzen eingeschraubt sind.

Bei einer erfindungsgemäßen Anordnung liegt die Schweißnaht verhältnismäßig weit außerhalb der Schraubverbindung und es werden daher die Kräfte über einen größeren Bereich übertragen, sodaß es nicht zu den Rissen mit all den Folgeerscheinungen kommen kann.

Wesentlicher Vorteil ist es auch, daß keine Schweißnähte an der gegenüberliegenden Seite existieren. Dadurch ist die Gefahr der Rißentstehung kaum mehr gegeben. Ein weiterer Vorteil dieser Ausführung ist, daß aufgrund der fehlenden Schweißnaht dieser keine tragende Funktion der Schraubfunktion zukommen kann. Dies vermeidet Möglichkeiten des Versagens bei auftretenden hochdynamischen Belastungen. Andererseits gewährleistet jedoch zufolge der formschlüssigen Klemmung der Gewindebutzen die Schraubverbindung die volle Tragfähigkeit.

Zur Erleichterung der Montage sind zweckmäßig die Gewindebutzen an einem gemeinsamen Montageblech angeschweißt.

Eine besonders zweckmäßige Anwendung einer erfindungsgemäßen Anordnung ergibt sich, wenn das Element aus hochhartem Werkstoff die gepanzerte Wanne eines Panzerfahrzeuges ist.

Nachstehend ist die Erfindung anhand eines in den Zeichnungen dargestellten Ausführungsbeispieles näher beschrieben, ohne auf dieses Beispiel beschränkt zu sein. Dabei zeigen:

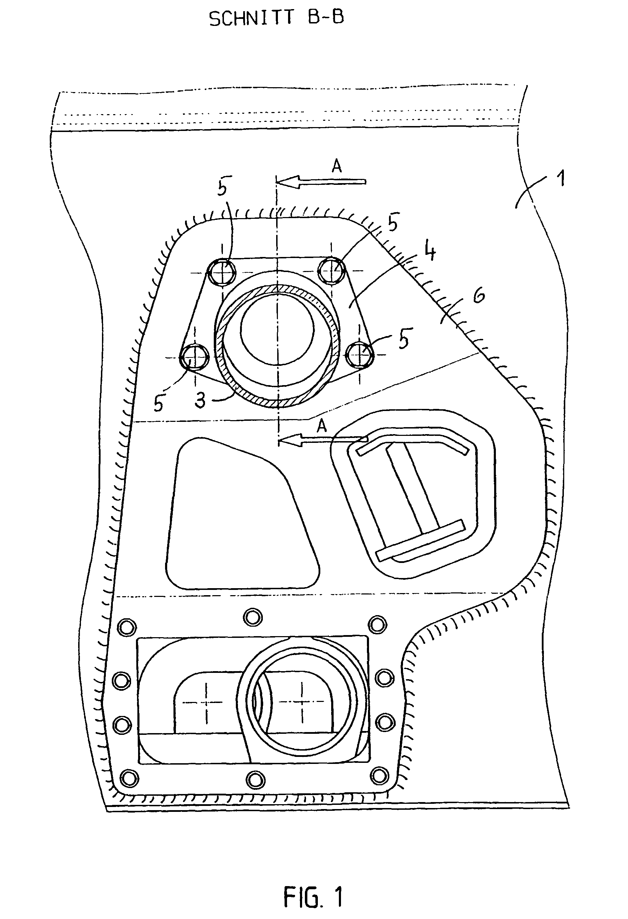

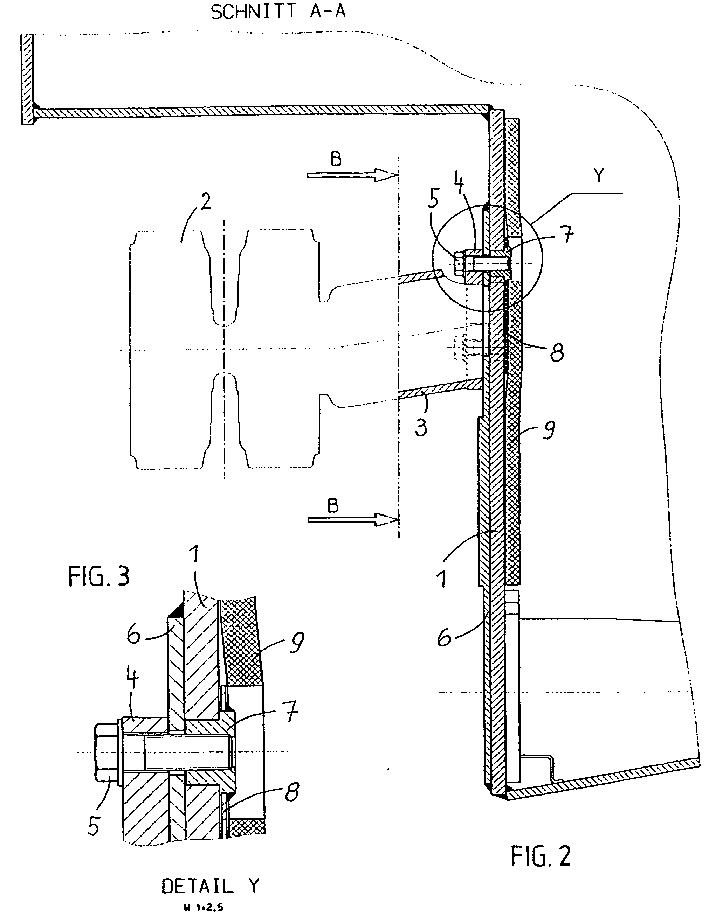

Fig. 1 eine teilweise geschnittene Ansicht einer erfindungsgemäßen Anordnung bei Anwendung auf ein Panzerfahrzeug, wobei die Schnittlinie entlang der Linie B-B in Fig. 2 verläuft;
Fig. 2 einen Schnitt entlang der Linie A-A in Fig. 1;
Fig. 3 ein Detail Y der erfindungsgemäßen Verbindung.

Gemäß den Zeichnungen sind in der gepanzerten Wanne 1 eines Panzerfahrzeuges außen Stützrollen 2 eines Kettenfahrwerkes befestigt. Die Stützrollen 2 sind dabei an einem Führungsrohr 3 gelagert, das über einen Flansch 4 an der Wanne 1 befestigt ist. Das Führungsrohr 3 und der Flansch 4 sind als eine Einheit zu sehen.

Hiezu ist der Flansch 4 über Schrauben 5 einerseits mit einer Platte 6 und andererseits mit der Wanne 1 verbunden. Die Platte 6 ist in einem möglichst weiten Abstand von der Schraube 5 mit der Wanne 1 verschweißt.

Die Schrauben 5 sind in Gewindebutzen 7 eingeschraubt, die an der Innenseite der Wanne 1 formschlüssig gehalten sind. Zur Erleichterung der Montage des Flansches 4 sind die Gewindebutzen 7 an einem Montageblech 8 angeschweißt. Ein Splitterschutz (Spalliner) 9 bedeckt einen Teil der Innenseite der Wanne 1.

Die Erfindung kann auch in verschleiß- und wechselfestigkeitsintensivem Einsatz von schweren Arbeitsmaschinen zur Erdbewegung oder im Bergbau Anwendung finden. Die Verwendung der erfindungsgemäßen Verbindung von Schneid- oder Brecheinrichtungen mit hochharten Materalien (z.B. Verschleißschichtelemente) zur Erhöhung der verschleißbedingten Lebensdauer ist hier von besonderem Nutzen.

## Patentansprüche

1. Anordnung zur Verbindung von Teilen (2) mit Elementen (1) aus hochharten Werkstoffen, bei welcher Teile (2) über einen Flansch (4) und an diesen angreifenden Schrauben (5) mit dem Element (1) aus hochhartem Werkstoff verbunden sind, **dadurch gekennzeichnet, daß** der Flansch (4) mit einer Platte (6) verschraubt ist, die im Abstand und einßerhald des von den Schraüben (5) eingenammenen Bereiches mit dem Element (1) aus hochhartem Werkstoff verschweißt ist, wobei die Schrauben (5) an der gegenüberliegenden Seite des Elementes (1) aus hochhartem Werkstoff in formschlüssig gehaltene Gewindebutzen (7) eingeschraubt sind.

2. Anordnung nach Anspruch 1, **dadurch gekennzeichnet, daß** die Gewindebutzen (7) an einem gemeinsamen Montageblech (8) angeschweißt sind.

3. Anordnung nach einem der Ansprüche 1 oder 2, **dadurch gekennzeichnet, daß** das Element aus hochhartem Werkstoff die gepanzerte Wanne (1) eines Panzerfahrzeuges oder die Verschleißschicht einer Arbeitsmaschine ist.

## Claims

1. An arrangement for connecting parts (2) to elements (1) made of very hard materials, wherein parts (2) are connected by means of a flange (4) and screws (5) engaging in the latter to the element (1) made of a very hard material, **characterised in that** the flange (4) is screwed to a plate (6), which is welded at a distance from and outside the area included by the screws (5) to the element (1) made of a very hard material, whereby the screws (5) are screwed into threaded slugs (7) mounted positively on the opposite side of the element (1) made of a very hard material.

2. The arrangement as claimed in Claim 1, **characterised in that** the threaded slugs (7) are welded on a common assembly sheet (8).

3. The arrangement as claimed in any one of Claims 1 or 2, **characterised in that** the element made of a very hard material is the armoured pan (1) of an armoured vehicle or the abrasion layer of a machine tool.

## Revendications

1. Agencement pour la liaison de pièces (3) avec des éléments (1) en matériaux très durs, dans lequel des pièces (2) sont reliées à l'élément (1) en matériau très dur par l'intermédiaire d'une bride et de vis s'accrochant dans cette dernière, **caractérisé en ce que** la bride (4) est vissée sur une plaque (6), qui est vissée à distance et à l'extérieur de la zone occupée par les vis (5) sur l'élément (1) en matériau très dur, les vis (5) étant serrées sur le côté opposé de l'élément (1) en matériau très dur dans des douilles taraudées (7) maintenues par complémentarité de forme.

2. Agencement selon la revendication 1, **caractérisé en ce que** les douilles taraudées (7) sont soudées sur une plaque de montage commune (8).

3. Agencement selon l'une quelconque des revendications 1 ou 2, **caractérisé en ce que** l'élément en matériau très dur est la cuve blindée (1) d'un véhicule blindé ou la couche d'usure d'une machine-outil.
